(19) Europäisches Patentamt
European Patent Office
Office européen des brevets

(11) EP 0 558 174 B1

(12) EUROPEAN PATENT SPECIFICATION

(45) Date of publication and mention
of the grant of the patent:
04.06.1997 Bulletin 1997/23

(51) Int Cl.6: C08K 5/00, C08L 95/00

(21) Application number: 93300023.4

(22) Date of filing: 04.01.1993

(54) **New softening agents for recycling asphalt pavement**

Neue Weichmacher für die Wiederverwendung von Asphaltstrassendecken

Nouveaux agents adoucissant pour recyclage des revêtements bitumineux

(84) Designated Contracting States:
AT BE CH DE FR GB IE IT LI NL

(30) Priority: 02.01.1992 US 815856

(43) Date of publication of application:
01.09.1993 Bulletin 1993/35

(73) Proprietors:
• Sawatzky, Henry
  Ottawa, Ontario K1H 5M3 (CA)
• Clelland, Floyd Ian
  Renfrew, Ontario K7V 3Z5 (CA)
• Farnand, Brian Anthony
  Nepean, Ontario K2G 5R3 (CA)
• Houde, Jean Jr
  Gatineau, Quebec J8V 2KR (CA)

(72) Inventors:
• Sawatzky, Henry
  Ottawa, Ontario K1H 5M3 (CA)
• Clelland, Floyd Ian
  Renfrew, Ontario K7V 3Z5 (CA)
• Farnand, Brian Anthony
  Nepean, Ontario K2G 5R3 (CA)
• Houde, Jean Jr
  Gatineau, Quebec J8V 2KR (CA)

(74) Representative: Harrison, Michael Robert
  Dibb Lupton Broomhead
  117 The Headrow
  Leeds LS1 5JX West Yorkshire (GB)

(56) References cited:
CA-A- 1 225 062          DE-A- 3 136 577
US-A- 4 549 834

**Description**

<u>Technical Field to which the Invention Belongs</u>

This invention relates to the rejuvenation of aged asphaltic pavement.

<u>Related Background Art</u>

As asphaltic concrete pavement ages, the asphalt cement becomes harder. This leads to the deterioration of the pavement. During this age hardening the heavy asphaltic component contents increase. A rejuvenation agent for such aged asphaltic concrete must be of sufficiently low viscosity to lower the viscosity of the aged asphalt to desired levels. It also must have a high polar to non-polar component ratio to assure compatibility with the high heavy asphaltic content in the asphalt of the salvaged aged asphaltic pavement.

Recycling of salvaged asphalt pavement has significant economic advantages because significant amounts of virgin asphalt and aggregates are needed to produce a new asphaltic cement pavement. Further, salvaged asphalt pavement contains high quality aggregates which may be either disposed of in dump sites or may be used in low performance applications.

The current situation in North America concerning the hot recycle of salvaged asphalt pavement is quite extensively described in a paper by W. D. Robertson et al entitled "Mix Design - The Key to Successful Pavement Recycling" and published in the Canadian Technical Asphalt Association Proceedings of 1988, p. 330.

One common practice at this time is to mix old milled asphalt pavement material with soft virgin asphalt and then to heat the whole mixture by the addition of preheated virgin aggregate. The current limit in Ontario, Canada of old pavement utilization is 50%, due to environmental regulations for the amount of smoke produced when the hot aggregate is added.

Specifications for recycling agents used in hot-mix recycling are described in a paper by Kari et al in "Asphalt Paving Technology" of 1980 p. 177. "Cold-in-place " recycling of asphalt pavements is increasing in popularity, as described by Wood et al in "Transportation Research Record" #1178 of 1988. N. Paul Khosla described the use of emulsified recycling agents in "Asphalt Paving Technology" of 1982 p. 522.

However, other approaches to recycling are possible. These include: methods that require minimal or no heating; improving the asphalt composition; adding various agents to asphalt compositions; and reconditioning bituminous pavements. These approaches are described in the following patents:

U. S. Patent No. 4,373,961, patented February 15th, 1983 by E. M. Stone;
U.S. Patent No. 2,904,494, patented September 15th, 1959 by R. L. Griffin;
U.S. Patent No. 3,793,189, patented February 19th, 1974 by L. W. Corbett;
U.S. Patent No. 3,221,615, patented December 7th, 1965 by E. W. McGovern;
U.S. Patent No. 4,278,469, patented July 14th, 1981, by T. Y. Yan et al;
U.S. Patent No. 4,279,660, patented July 21st, 1981, by I. Kamo et al;
U.S. Patent No. 4,325,738, patented April 20th, 1982, by H. Plancher;
U.S. Patent No. 4,549,834, patented October 29th, 1985, by J. P. Allen.

<u>Disclosure of the Invention</u>

By this invention, a method is provided for the rejuvenation of aged salvaged asphaltic pavement material, the method being characterized by: incorporating, into the old asphaltic pavement, a novel nitrogen-containing adhesion-improving, anti-stripping agent as an additive. The additive is characterized by being a sewage sludge-derived oil, or a fraction thereof, the sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, about 3.4% to about 5% by weight; oxygen, about 5.8% to about 6.9% by weight; sulfur, about 0.3% to about 0.8% by weight; hydrogen, about 9.7% to about 10.4%, and carbon, about 76.9% to about 79.8%.

This invention also provides a method for improving the compatibility of aged asphalt in salvaged old asphalt paving materials with other asphaltic materials, the method being characterized by: incorporating, into the old asphaltic pavement and into any other asphaltic materials, and/or rejuvenating agents and/or suitable softening agents, a novel nitrogen-containing adhesion-improving , anti-stripping agent as an additive. The additive is characterized by being a sewage sludge-derived oil, or a fraction thereof, the sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, about 3.4% to about 5% by weight; oxygen, about 5.8% to about 6.9% by weight; sulfur, about 0.3% to about 0.8% by weight; hydrogen, about 9.7% to about 10.4%, and carbon, about 76.9% to about 79.8%.

This invention also provides a method for improving the resistance to stripping of rejuvenated asphalt cement aggregate characterized by incorporating, into the old asphaltic pavement, a novel nitrogen-containing adhesion-improving, anti-stripping agent as an additive, the additive being characterized by being a sewage sludge-derived oil, or a fraction thereof, the sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, about 3.4% to about 5% by weight; oxygen, about 5.8% to about 6.9% by weight; sulfur, about 0.3% to about 0.8% by weight; hydrogen, about 9.7% to about 10.4%, and carbon, about 76.9% to about 79.8%.

In these methods, the amount of sewage sludge-derived oil is from about 2 to about 15% by weight.

This invention still further provides an asphaltic composition including comminuted, aged asphaltic pavement material, and an effective amount, e.g., from about 2% to about 15% by weight, of a blend of soft asphalt cement, and/or a conventional asphalt cement, and/or a cutback asphalt, with a novel nitrogen-containing adhesion-improving, anti-stripping agent as an additive. The additive is characterized by being the sewage sludge-derived oil which comprises a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, about 3.4% to about 5% by weight; oxygen, about 5.8% to about 6.9% by weight; sulfur, about 0.3% to about 0.8% by weight; hydrogen, about 9.7% to about 10.4%, and carbon, about 76.9% to about 79.8%.

The sewage sludge-derived oil preferably has the following elemental composition: nitrogen, 3.42% to 4.95% by weight; oxygen, 5.84% to 6.89% by weight; sulfur, 0.34% to 0.83% by weight; hydrogen, 9.70% to 10.44% by weight; and carbon, 76.92 to 79.76% by weight.

The amount of such sewage sludge-derived oil or a fraction thereof, may be from about 2 to about 15%, preferably 2-12% by weight.

In the asphaltic composition, the other agent may be a hydrocarbon product with physical characteristics selected to restore aged asphalt to the requirements of current asphalt specifications, e.g., it may be at least one rejuvenating agent or at least one softening agent; or it may be a soft asphalt cement, and/or a cutback asphalt, and/or a conventional asphalt cement. Preferably, it should be a soft virgin asphalt.

The comminuted aged asphaltic pavement generally is of a size up to 1" (2.54 cm) in diameter.

Effects of the Invention

The effects of the invention include a method and system for the reconstitution of the used materials of existing asphalt pavement, thereby providing almost new materials to be used in the construction of new asphalt pavements. The use of the sewage sludge-derived oils for the rejuvenation of asphalt in salvaged asphalt paving material thus allows for recycling. Sewage sludge-derived oils or fractions thereof have been found to be well suited to be used as asphaltic rejuvenation agents, preferably in combination with appropriate other conventional rejuvenating agents and/or softening agents for the following reasons:

1. They have low viscosities and thus they can soften the hardened asphalt by lowering viscosities and increasing penetration values.
2. They have an affinity for heavy residual components, e.g., asphaltenes. They are thereby compatible with asphalts of high asphaltene content and can also render other appropriate materials.
3. They improve resistance of rejuvenated recycled asphalt to stripping from the aggregates.

The sewage sludge-derived oil should be topped at high temperatures in order to meet some of the specifications for asphalt paving materials. Alternatively, it could be mixed with other high boiling appropriate materials. Subsequently this mixture would have the advantageous properties of both of these components for hot recycling.

In cold recycling, no complications are foreseen even if the +150°C sewage sludge-derived oil is used. In such case, the sewage sludge-derived oil could be used either per se or together with other materials.

As noted above, the asphaltic composition may also include other asphaltic materials and/or rejuvenating agents and/or suitable softening agents. Such rejuvenating agents and/or suitable softening agents may be as described below:

a) A hydrocarbon product with physical characteristics selected to restore aged asphalt to the requirements of current asphalt specification, as described in Kari et al "Asphalt Paving Technology" 1980 p. 77.
b) Soft asphalt cements and cutback asphalts. One example of such agents is that known by the Trade-mark MOBILSOL-30. Examples of other suitable modifiers are provided in Khosla, "Asphalt Paving Technology" 1982 page 522.

c) Petroleum oils, soft asphaltic residues and conventional asphaltic cements, as described in Robertson et al " Mix Design-Key to Successful Pavement Recycling" page 330.

Such sewage sludge-derived oil may be produced according to the teachings of Canadian Patent No. 1,225,062, issued August 4th, 1987, to T. R. Bridle. The teachings of such a patent may be summarized as follows:

A batch-type reaction system for the production of such sludge-derived oil described in the above-identified Canadian patent may be operated as follows: A single reactor provides both heating and reaction zones and consists of a PYREX$_{TM}$ tube. This was heated in a furnace, off-gases being condensed in a trapping system consisting of three flasks connected in series, using ice as the coolant. Non-condensable gases (NCG) were vented by pipe from the system to a furnace hood and were not collected. A typical run was conducted by charging 550 g of dried sludge (93-96% solids) into the reactor and deaerating with nitrogen while in the vertical position. The reactor volumetric packing for all runs was a nominal 50%. The reactor was then placed in the furnace, which was inclined by a support 10° to facilitate liquid transport. All the lines, traps, etc. were connected and the entire system purged with nitrogen (15 m$\ell$/s) for 20 to 30 minutes. The furnace was then switched on and brought up to operating temperature at a controlled rate, the control employing a thermocouple placed in the sludge bed and connected to thermocouple switch and readout. Once operating temperature had been reached, the nitrogen purge rate was reduced to 7 m$\ell$/s. When all visible signs of reaction, i.e., gas/oil flow, ceased the heat was switched off and the nitrogen purge rate increased to 15 mL/s for approximately 30 minutes. The system was dismantled and the char, oil and pyrolytic water collected and stored for analyses, oil/water separation being achieved using a separatory funnel.

The operating conditions and results for a continuous-type reactor system are shown in Table 1 below, while typical elemental analyses of the resultant oils and chars are shown in Table 2 and a distribution analysis of aliphatic hydrocarbons found in an oil is shown in Table 3. The continuous reactor results are shown in Table 4. All the data in the tables is expressed on a total solids basis (not corrected for volatiles). The non-condensable gas (NCG) yield was calculated by difference. Analysis of the NCG, by gas chromatography (GC), indicated that it contained roughly 6% methane and 10% carbon monoxide with the remainder comprising mostly carbon dioxide and nitrogen. The calculated calorific value is approximately 2.0 MJ/kg of NCG.

Most of the test runs were conducted at optimum conditions defined as: optimum conversion temperature as determined by differential scanning calorimetry; linear increase of temperature with time to operating temperature at 10°C/minute; and continuous nitrogen purge. Runs 11, 12, 13, 22, 24 and 19 instead were conducted with one variable altered during each test, as indicated in Table 1.

TABLE 1 - A

| TEST RUN CONDITIONS AND RESULTS | | | |
|---|---|---|---|
| OPERATING CONDITIONS | | | |
| RUN NO. | SLUDGE SAMPLE | TEMP (°c) | OTHER COMMENTS |
| 1,20,29 | C | 400 | Optimum |
| 5-10 | D | 450 | Optimum |
| 14,15,18 | B | 450 | Optimum |
| 2 | C | 425 | 63% WAS |
| 3 | C | 425 | 75% WAS |
| 4 | C | 425 | 88% WAS |
| 11,12,13 | B | 350 | Low Temperature |
| 22 | C | 450 | High Temperature |
| 23 | C | 400 | No $H_2$ purge during run |
| 24 | C | 400 | Ramp at 5 C/min |
| 19 | C | 400 | 10000 ppm Ni spike |
| 31 | C | 400 | Second reactor, empty |
| 32 | C | 400 | Second reactor, char |
| 33 | C | 400 | Second reactor, catalyst |

TABLE 1 - B

| TEST RUN CONDITIONS AND RESULTS OIL | | | |
|---|---|---|---|
| RUN NO. | YIELD % | CALORIC VALUE MJ/kg | VISCOSITY CENTISTOKES |
| 1,20,29 | 20.8 | 38.40 | Solid |
| 5-10 | 21.1 | 37.43 | 31.1 |
| 14,15,18 | 24.1 | 33.13 | 60.5 |
| 2 | 25.8 | 33.83 | 70.3 |
| 3 | 28.6 | 34.13 | 97.5 |
| 4 | 28.7 | 31.77 | 214.0 |
| 11,12,13 | 12.8 | 33.32 | Solid |
| 22 | 22.3 | 30.87 | Solid |
| 23 | 19.8 | 38.00 | 44.9 |
| 24 | 16.3 | 37.92 | Solid |
| 19 | 20.9 | 33.98 | 63.4 |
| 31 | 19.0 | 37.49 | Solid |
| 32 | 17.2 | 38.18 | 39.5 |
| 33 | 19.0 | 37.49 | 31.0 |

TABLE 1 - C

| RESULTS | | | | | |
|---|---|---|---|---|---|
| CHAR RUN | | | | | |
| RUN NO. | YIELD % | CALORIC VALUE MJ/kg | NONCONSABLES YIELD % | PYROLYTIC WATER YIELD % | THERMAL EFFICIENCY % |
| 1,20,29 | 59.5 | 9.86 | 11.6 | 8.1 | 81.9 |
| 5-10 | 52.5 | 10.68 | 13.2 | 13.1 | 77.7 |
| 14,15,18 | 53.7 | 10.08 | 13.3 | 8.8 | 83.2 |
| 2 | 57.1 | 11.35 | 12.2 | 4.9 | 87.2 |
| 3 | 56.7 | 11.63 | 10.1 | 4.6 | 90.8 |
| 4 | 54.6 | 10.65 | 8.9 | 7.8 | 82.4 |
| 11,12,13 | 65.8 | 12.00 | 10.3 | 11.2 | 79.3 |
| 22 | 54.6 | 9.39 | 12.1 | 11.0 | 80.4 |
| 23 | 59.1 | 10.51 | 12.2 | 8.9 | 80.1 |
| 24 | 62.7 | 11.24 | 10.3 | 10.7 | 76.9 |
| 19 | 60.8 | NA | 10.6 | 7.7 | 88.7 |
| 31 | 60.0 | 11.07 | 12.0 | 9.0 | 80.1 |
| 32 | 59.9 | 11.07 | 13.0 | 9.9 | 77.0 |
| 33 | 56.8 | 10.01 | 14.8 | 9.4 | 75.0 |
| NA = Not Available | | | | | |
| Solid is defined as 214 centistokes | | | | | |
| Viscosity measured at room temperature (20-25°C) | | | | | |

Table 2 - A

| OIL AND CHAR ELEMENTAL ANALYSIS (%) | | | | | |
|---|---|---|---|---|---|
| OIL | | | | | |
| Run No. | C | H | N | S | O |
| 20 | 78.00 | 10.10 | 3.99 | 0.75 | 6.18 |
| 9 | 78.74 | 10.17 | 3.45 | 0.41 | 6.37 |

Table 2 - A   (continued)

| OIL AND CHAR ELEMENTAL ANALYSIS (%) | | | | | |
|---|---|---|---|---|---|
| OIL | | | | | |
| Run No. | C | H | N | S | O |
| 15 | 77.39 | 9.70 | 4.95 | 0.83 | 6.90 |
| 22 | 77.92 | 10.20 | 3.99 | 0.61 | 6.51 |
| 23 | 78.00 | 10.30 | 3.42 | 0.74 | 7.00 |
| 24 | 77.91 | 10.44 | 3.87 | 0.74 | 6.48 |
| 19 | 79.07 | 10.06 | 4.66 | 0.53 | 7.07 |
| 31 | 76.92 | 10.15 | 4.11 | 0.65 | 6.89 |
| 32 | 79.76 | 10.25 | 4.19 | 0.56 | 5.84 |
| 33 | 79.30 | 10.41 | 3.49 | 0.34 | 5.84 |

Table 2 - B

| OIL AND CHAR ELEMENTAL ANALYSIS (%) | | | | | |
|---|---|---|---|---|---|
| CHAR | | | | | |
| Run No. | C | H | N | S | O |
| 20 | 25.45 | 1.97 | 2.79 | 1.39 | 11.90 |
| 9 | 26.02 | 1.61 | 3.01 | 1.16 | 12.70 |
| 15 | 24.53 | 1.22 | 2.84 | 0.74 | 9.26 |
| 22 | 22.53 | 1.34 | 2.54 | 1.52 | 12.54 |
| 23 | 23.83 | 1.70 | 2.59 | 1.44 | 11.55 |
| 24 | 24.76 | 1.85 | 2.83 | 1.33 | 12.37 |
| 19 | 23.36 | 1.56 | 2.76 | 1.48 | 13.25 |
| 31 | 26.53 | 2.13 | 2.80 | 1.31 | 11.94 |
| 32 | 25.97 | 1.98 | 2.80 | 1.34 | 11.63 |
| 33 | 24.22 | 1.62 | 2.74 | 1.50 | 11.35 |

Table 3

| ALIPHATIC HYDROCARBON DISTRIBUTION IN OIL | |
|---|---|
| Compound | % |
| $C_{10}$ | 8 |
| $C_{10-15}$ | 30 |
| $C_{15-16}$ | 6 |
| $C_{16-17}$ | 5 |
| $C_{17-19}$ | 10 |
| $C_{19-20}$ | 10 |
| $C_{20-21}$ | 10 |
| $C_{21}$ | 21 |
| | $\overline{100}$ |

Table 4 - A

| CONTINUOUS REACTOR RESULTS REACTOR CONDITIONS | | | | | | |
|---|---|---|---|---|---|---|
| Run No | Temp (°) | Sludge Fd Rt g/h | Solids Residence Time (Min) | Char Inv. (g) | Gas Seal | A Gas Path |
| 34 | 350 | 750 | 8 | 51 | no | mixed flow |

Table 4 - A   (continued)

| Run No | Temp (°) | Sludge Fd Rt g/h | Solids Residence Time (Min) | Char Inv. (g) | Gas Seal | A Gas Path |
|---|---|---|---|---|---|---|
| 35 | 450 | 750 | 8 | 54 | no | mixed flow |
| 36 | 500 | 750 | 8 | 53 | no | mixed flow |
| 37 | 450 | 750 | 28 | 201 | yes | counter current |
| 38 | 450 | 750 | 8 | 56 | no | 1st zone only |
| 39 | 450 | 750 | 8 | 55 | no | co-current |
| 40 | 450 | 1000 | 8 | 70 | yes | counter current |
| 41 | 450 | 500 | 20 | 88 | yes | counter current |

CONTINUOUS REACTOR RESULTS REACTOR CONDITIONS

Table 4 - B

CONTINUOUS REACTOR RESULTS

| | OIL | | | CHAR | |
|---|---|---|---|---|---|
| Run No | Yield (%) | Cal Value | Viscosity | Yield (%) | Cal Value |
| 34 | 18.53 | 27.88 | 160 | 64.68 | 8.84 |
| 35 | 29.71 | 31.12 | 72 | 59.76 | 8.27 |
| 36 | 28.16 | 34.01 | 34 | 58.10 | 7.67 |
| 37 | 24.10 | 35.53 | 33 | 59.50 | 8.28 |
| 38 | 24.46 | 30.06 | 110 | 59.47 | 8.25 |
| 39 | 27.96 | 33.20 | 73 | 59.74 | 8.70 |
| 40 | 26.75 | 31.04 | 82 | 61.11 | 8.54 |
| 41 | 23.74 | 35.00 | 34 | 57.79 | 8.12 |

Continuous Reactor Results measured at 38°C (ASTM Standard) of Table 1, measured at room temperature. Conducted using sludge from source "C".

Table 4 - C

CONTINUOUS REACTOR RESULTS NOG

| | NOG | | | | |
|---|---|---|---|---|---|
| Run No | Yield (%) | Cal Value | Phys Water Yield (%) | Thermal Efficiency | Char Inv SFR |
| 34 | 7.28 | 3.18 | 3.62 | 73.85 | 0.068 |
| 35 | 7.57 | 5.04 | 2.18 | 96.80 | 0.072 |
| 36 | 3.61 | 20.05 | 3.06 | 98.04 | 0.071 |
| 37 | 6.37 | 9.68 | 5.72 | 93.77 | 0.268 |
| 38 | 9.26 | 3.72 | 4.23 | 83.75 | 0.075 |
| 39 | 6.67 | 6.07 | 5.60 | 98.91 | 0.073 |
| 40 | 4.76 | 7.20 | 3.37 | 92.14 | 0.070 |
| 41 | 7.42 | 10.96 | 5.88 | 91.82 | 0.176 |

The sewage sludge-derived oil produced appears to be largely aliphatic with a moderate oxygen content but with nitrogen derived from proteins and fatty acid in the sewage sludge. The solid residue is 80% inorganic matter.

The above-described sewage sludge-derived oils may have the following composition:

Table 5

| | General Range | Typical Range |
|---|---|---|
| Nitrogen: | 2% to about 8% | 3.4% to about 5% |

Table 5   (continued)

|  | General Range | Typical Range |
|---|---|---|
| Oxygen: | 3% to about 12% | 5.8% to about 6.9% |
| Sulphur: | 0.1% to about 4% | 0.3% to about 0.8% |
| Hydrogen: | 8% to about 11% | 9.7% to about 10.4% |
| Carbon: | 86.9% to about 65% | 76.9% to about 79.8% |

These sewage sludge-derived oils can be dehydrated by distillation. Portions of the nitrogenous groups appear to be amines and amides with some pyridinic and pyrrolic types. Portions of the oxygen-containing groups appear to be carboxylic and amide types.

The following Table 6 provides an identification of individual components of sewage sludge-derived oil (SDO) by Gas Chromatography/Mass Spectrograph (GC/MS):

Table 6

| Components | Approximate concentration in Fraction | Approximate concentration in dehydrated sewage sludge-derived oil |
|---|---|---|
| Fraction 1 (boiling: up to 176°C) | (4.6% of dehydrated sewage sludge-derived oil) | |
| Low boiling aromatics | 15.3% | 0.7% |
| Pyridines | 1.1% | 0.05% |
| Total Alkanes | 2.5% | 0.12% |
| Indoles | 1.7% | 0.08% |
| Pyrroles | 1.1% | 0.05% |
| Thiocyanates | traces (i.e. less than 0.05%) | |
| Esters | traces (i.e. less than 0.05%) | |
| Fraction 2 (boiling range: 176°-260°C) | (22.5% of dehydrated sewage sludge-derived oil) | |
| Phenols | 3.2% | 0.7% |
| Pyrroles | | |
| Esters/acids | | |
| Succinimide ($C_5H_7NO_2$) | | |
| Amides | traces (i.e. less than 0.05%) | |
| Thioureas | traces (i.e. less than 0.05%) | |
| Thiazoles | traces (i.e. less than 0.05%) | |
| Fraction 3 (boiling range: 260-400°C) | (30.6% of dehydrated sewage sludge-derived oil) | |
| $C_nH_{2n-1}NO$ | | |
| $C_nH_{2n-1}N$. | | |

It was found that, as the fractions get heavier, the identification of individual components becomes more difficult because of the complexity of the fraction.

The actual analysis (by elements) of this SDO is

N:   6.77%
O:   11.21%
S:   0.74%
H:   9.75%
C:   71.53%

An analysis of one specific sewage sludge-derived oil was carried out by gas chromatography/mass spectroscopy as follows:

This analysis is performed by connecting a mass spectrometer to the outlet of a column used in a gas chromatograph. The sample is injected into the gas chromatograph which serves to divide the sample into individual components. Components of a sample are eluted from the column according to their differing volatilities, with the lowest boiling components usually eluting first. These are then passed to the mass spectrograph which causes the molecules to be fragmented and ionized. The ions of the different mass fragments of the component are detected electronically. The pattern of fragmentation as the ions move through a magnetic field is then used to identify the chemical functional groups of the component. This is repeated for each component that is eluted from the chromatographic column. The patterns of the ion fragments are very well known for chemical functional groups and can be used for both identification and quantitative analysis. As the boiling range of the fraction increases the identification of individual components becomes more difficult because of the complexity of the components and the decreasing ability to resolve individual components by gas chromatography.

The samples of sewage sludge-derived oil were characterized by first distilling to obtain 5 fractions suitable for gas chromatography/mass spectrometry analysis. Each of these fraction was then analyzed to determine the amount of each functional type of component. The results are shown in the following Table 7, where the concentration reported represent the amount of the component type in the particular fraction only.

Table 7

| Components | Concentration, % |
|---|---|
| Fraction 1, Initial Boiling Point to 176°C | |
| Aromatics | 15.3% |
| Pyridines | 1.1% |
| Alkanes | 2.5% |
| Indoles | 1.7% |
| Pyrroles | 1.1% |
| Thiocyanates | traces |
| Esters | traces |
| | |
| Fraction 2, Boiling between 176 and 260°C | |
| Phenols | 3.2% |
| Pyrroles | 1% |
| Succinimide ($C_5H_7NO_2$) | trace |
| Amides | traces |
| Thioureas | traces |
| Thiazoles | traces |
| | |
| Fraction 3, Boiling between 260 and 400°C | |
| No individual components could be identified. The response indicates most of the components have the general chemical formula of $C_nH_{2n-1}N$ and $C_nH_{2n-1}$. These components are most likely to have a heteroatomic ring with nitrogen and are highly substituted. | |
| Fraction 4, Boiling between 400 and 525°C | |

| | |
|---|---|
| No individual components could be identified. Common features with the lower boiling fractions suggest complex molecules containing nitrogen and oxygen. | |
| | |
| Residue, Boiling higher than 525°C | |
| | |
| This fraction could not be chromatographed. | . |

Consequently, it is seen that the sewage sludge-derived oil comprises a mixture of saturated aliphatic hydrocarbons, monoaromatic hydrocarbons, diaromatic hydrocarbons, polyaromatic hydrocarbons, polar compounds and basic, pyridine-soluble compounds. Large portions of the nitrogenous groups appear to be amine and amides with some pyridinic and pyrrolic types. Large portions of the oxygen containing groups appear to be carboxylic and amide types. The sewage sludge-derived oil has the following typical elemental composition: nitrogen, about 3.4% to about 5% by weight; oxygen, about 5.8% to about 6.9% by weight; sulfur, about 0.3% to about 0.8% by weight; hydrogen, about 9.7% to about 10.4% by weight; and carbon, about 76.9% to about 79.8% by weight. The sewage sludge-derived oils can be dehydrated by distillation.

The following standard test methods were used for determining the properties of the rejuvenated old asphaltic paving materials containing sewage sludge-derived oil or fractions thereof:

The Standard Specification for Viscosity-Graded Asphalt Cement for Use in Pavement Construction is ASTM D3381-83.

The Standard Specification for Penetration-Graded Asphalt Cement for Use in Pavement Construction is ASTM D-946-82.

The Standard Test Method for Penetration of Bituminous Materials is ASTM D5-86.

The Standard Test Method for Softening Point of Bitumen (Ring-and-Ball Apparatus) is ASTM D 36-86.

The Standard Test Method for Effect of Heat and Air in Asphaltic Materials (Thin-Film Oven Test) is ASTM D1754-87.

The Standard Test Method for Ductility of Bituminous Materials is ASTM D 113-86.

The Standard Test Method for Solubility of Asphalt Materials in Trichloroethylene is ASTM D 2042-81.

Standard Test Method for Kinematic Viscosity of Asphalts (Bitumens) is ASTM D 2170-85.

Standard Test Method for Viscosity of Asphalts by Vacuum Capillary Viscometer is ASTM D 2171-88.

The Standard Test Method for Separation of Asphalt into Four Fractions is ASTM D4124-86.

The Standard Definitions of Terms Relating to Materials for Roads and Pavements is ASTM D8-88.

Method of Test For Stripping By Static Immersion is described by Ministry of Transportation of Ontario (MTO).

The materials used in the following examples were as follows:

Distillation fractions of sewage sludge-derived oils: +150°C, +250°C, +350°C, and +400°C; Shell, Gulf, and Petro Canada 85/100 Pen grade asphalt; Petro Canada 150/200 Pen grade asphalt; and Local (Ottawa, Canada area) milled recycled asphalt cement (RAC).

The sewage sludge-derived oils used have the compositions as previously described.

Brief Description of the Drawings

In the accompanying drawings,

Figure 1 is a graph showing penetration (in dmm), as ordinate and Wt% sewage sludge-derived oil in recovered asphalt cement as abscissa;

Figure 2 is a graph of viscosity (in cSt) as ordinate and Wt% sewage sludge-derived oil in recovered asphalt cement as abscissa;

Figure 3 is a graph of penetration (PEN in PT 25°C) as ordinate and % sewage sludge-derived oil, +350°C additive, in aged asphalt as abscissa; and

Figure 4 is a bar graph of blends of asphalt, additive and aggregate showing the retaining coating.

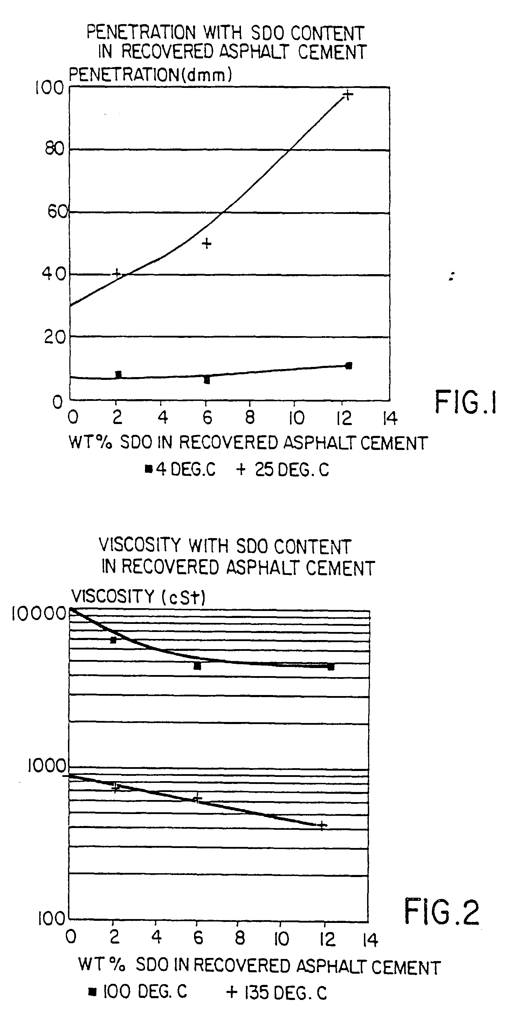

As seen from the drawings, Figure 1 is a graphical summary of the penetration tests previously described showing the blend of recovered asphalt cement and sewage sludge-derived oil (+150°C), vs. penetration at 4°C and at 25°C.

Figure 2 is a graphical summary of the viscosity tests previously described showing the blend of recovered asphalt cement and sewage sludge-derived oil (+250°C), vs. viscosity at 100°C and at 135°C.

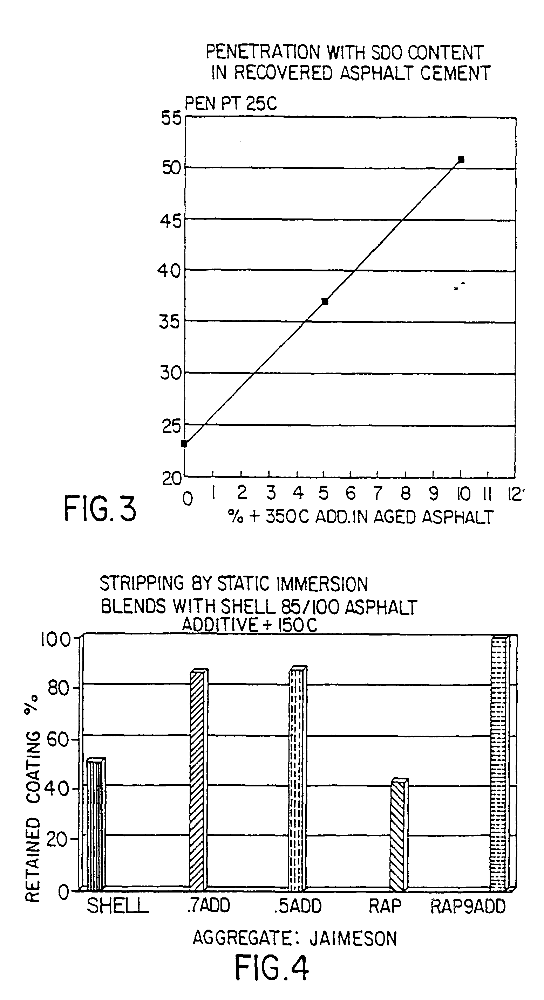

Figure 3 is a graphical summary of the penetration tests previously described showing the penetration vs. sewage sludge-derived oil, +350°C additive, blended with aged asphalt.

Figure 4 shows the amount of retained coating after the stripping by immersion test previously described.

Description of Special Embodiments

The manner of incorporation of sewage sludge-derived oils into salvaged asphaltic pavement for recycle can be by various methods, including hot mixing and cold processing, with or without the presence of virgin aggregate and/or virgin asphalt cement and/or rejuvenating agents and/or other suitable softening agents. This is described by the following examples.

Example 1

Aged asphalt cement extracted from discarded old pavement was softened with sewage sludge-derived oil and Bow River asphalt, (a soft virgin asphalt). As well, a hard commercial asphalt was softened with both sewage sludge-derived oil and Bow River asphalt. The penetrations and viscosities for these examples are shown in Tables 8 and 9 and graphically in Figures 1 and 2.

Figure 1 is a graphical summary of the penetration tests previously described showing the blend of recovered asphalt and sewage sludge-derived oil (+150°C) vs. penetration at 4°C and at 25°C.

Figure 2 is a graphical summary of the viscosity tests previously described showing the blend of recovered asphalt and sewage sludge-derived oil (+250°C) vs. viscosity at 100°C and at 135°C.

TABLE 8

| Penetration Comparison Between Recovered Asphalt Cement and Petro Canada 85/100 Asphalt When Different Additives are Added | | |
|---|---|---|
| PENETRATION (dmm) | | |
| | 4°C | 25°C |
| RAC | 7 | 30 |
| RAC + 2.1% SDO | 7 | 40 |
| RAC + 6.0% SDO | 7 | 50 |
| RAC + 12.2% SDO | 11 | 98 |
| RAC + 22.0% Bow River | 13 | 80 |
| PC 85/100 | 8 | 96 |
| PC 85/100 + 6.0% SDO | 14 | 159 |
| PC 85/100 + 14.0% Bow River | 15 | 148 |
| Bow River | >300 | n/a |
| SDO | >400 | n/a |
| RAC = Recovered Asphalt Cement<br>SDO = Sewage Sludge-Derived Oil<br>PC = Petro Canada 85/100 Asphalt<br>The SDO fraction used was SDO +150°C<br>The Bow River fraction used was Bow River +454°C<br>n/a = Not analyzed | | |

TABLE 9

| Viscosity Comparison Between Recovered Asphalt Cement and Petro Canada 85/100 Asphalt When Different Additives are Added | | |
|---|---|---|
| KINEMATIC VISCOSITY (cSt) | | |
|  | 100°C | 135°C |
| RAC | 11039 | 866 |
| RAC + 2.1% SDO | 6883 | 719 |
| RAC + 6.0% SDO | 4794 | 624 |
| RAC + 12.2% SDO | 4807 | 413 |
| RAC + 22.0% Bow River | 3079 | 287 |
| PC 85/100 | n/a | 332 |
| PC 85/100 + 6.0% SDO | 1690 | 218 |
| PC 85/100 + 14.0% Bow River | 1518 | 203 |
| Bow River | 67.34 | 21.44 |
| SDO | 21.95 | 7.25 |
| RAC = Recovered Asphalt Cement<br>SDO = Sewage Sludge-Derived Oil<br>PC = Petro Canada 85/100 Asphalt<br>n/a = Not analyzed<br>The SDO fraction used was SDO +150°C<br>The Bow River fraction used was Bow River +454°C | | |

A brief synopsis of the compositions (in weight %) of the virgin asphalts used, as carried out by the Asphalt Separation Test by ASTM D 4124, is shown in Table 10, as follows.

TABLE 10

| Asphalt | Asphaltene | Saturates | Nap/Arom. | Pol/Ar. |
|---|---|---|---|---|
| PC 85/100 | 16.1 | 14.3 | 34.2 | 35.3 |
| PC 150/200 | 9.3 | 16.0 | 35.9 | 38.8 |
| PC = Petro Canada Asphalts. Both asphalts are commercial asphalts graded according to penetration grades, i.e. 85/100 = penetration between 85 and 100 dmm.<br>Nap/Arom. = Naphthene Aromatics<br>Pol/Ar. = Polar Aromatics | | | | |

The results of the tests performed on the commercial virgin asphalts used are summarized n Table 11 below:

TABLE 11

| Test | Units | PC 85/100 | PC 150/200 |
|---|---|---|---|
| Strp Imm. | % | 36 | 20 |
| Pen. 4,25,30°C | dmm | 8,96,158 | 15,174,218 |
| Flash Pt. COC | °C | 324 | 316 |
| Viscosity, 60°C | Poises | 1573 | 476.1 |
| , 135°C | cSt | 332.1 | 191.8 |
| Ductility,25°C | cm | +150 | 130 |
| TriClEth.Sol'ty | % | 99.93 | 99.95 |
| TFOT Wt Loss | % | 0.024 | 0 |
| Pen. 25°C | dmm | 53 | 99 |
| Ret.Pen. | % | 53 | 99 |

TABLE 11 (continued)

| Test | Units | PC 85/100 | PC 150/200 |
|---|---|---|---|
| Vis.60°C | Poises | 3178 | 799.5 |
| 135°C | cSt | 446.2 | 244 |
| Ductility, 25°C | cm | 150+ | n/a |
| Strp.Imm. | % | 25 | n/a |
| Strp Imm. = Stripping By Static Immersion<br>Pen. = Penetration<br>TriClEth.Sol'ty = Solubility in Trichloroethylene<br>TFOT = Thin-Film Oven Test<br>Ret.Pen. = Retained Penetration<br>Vis. = Viscosity | | | |

The results of Tables 8 and 9 indicate that small amounts of sewage sludge-derived oil soften hard asphalt and recycled asphalt as much as larger amounts of soft virgin asphalt. In particular, aged asphalt of 30 dmm penetration at 25°C is converted to an 85/100 asphalt by the addition of 12.2% sludge-derived oil; commercial 85/100 asphalt is converted to soft asphalt (150/200) by the addition of 6% sludge-derived oil. As well, the recycled asphalt blended with 12.2% sludge derived oil passes Ministry of Transport of Ontario specification for kinematic viscosity (minimum of 280 cSt) for 85/100 asphalt [test ASTM 2170-85]. The performance of sewage sludge-derived oil for softening hard asphalt and recycled asphalt at least matches the performance of Bow River asphalt but at significantly reduced amounts. If more Bow River had been added to the old asphalt to bring it to a specified penetration of 85/100 asphalt, then the viscosity would have been below the specified 280 cSt (minimum).

Example 2

The addition of sewage sludge-derived oil to recycled asphalt cement has been found to improve ductility.

In this example, 5% of +150°C sewage sludge-derived oil and 5% of +250°C sewage sludge-derived oil were added, respectively, to aged asphalt.

A comparison of the sewage sludge-derived oil containing more lighter and less lighter material as additives for aged asphalt is shown below in Table 12.

TABLE 12

| INCREASE OF DUCTILITY BY ADDITION OF SDO | | | |
|---|---|---|---|
| | RAC V | 5% SDO* in RAC V | 5% SDO** in RAC V |
| Penetration @ 25°C (mm/10) | 38 | 59 | 55 |
| Viscosity @60°C (Poises) | 11425 | 2896 | 3531 |
| Ductility @25°C (cm) | 31.5 | 137.0 | 101.2 |

\* Sewage Sludge-Derived Oil+150°C was used
\*\* Sewage Sludge-Derived Oil+250°C was used
SDO = Sewage Sludge-Derived Oil
RAC = Recovered Asphalt Cement

As shown in Table 12, above, the penetrations increased from 38 to 59 and 38 to 55 and the viscosities at 60°C were lowered from 11425 to 2896 and 3531 poises respectively. Figure 3 is a graphical summary of the penetration tests previously described showing the penetration vs. +350°C sewage sludge-derived oil additive blend with aged asphalt.

This shows that the material with lighter components is somewhat more effective for softening. Further, the sewage sludge-derived oil is quite effective in increasing ductilities from 31.5 to 137 and 101 cm respectively. ASTM D-946 specifies a minimum of 100 cm ductility for hard (85/100) asphalt cement. The increase in ductility demonstrates the compatibility of sewage sludge-derived oil with heavy asphaltenic materials.

EXAMPLE 3

Blends of sewage sludge-derived oil with aged asphalt when subjected to Thin-Film Oven Tests yield satisfactory results. This is shown below in Table 13 when a blend containing 9% of sewage sludge-derived oil in aged asphalt was subjected to the Thin-Film Oven Test. 1

TABLE 13

| EFFECT OF OXIDATION | | | | |
|---|---|---|---|---|
| Thin-Film Oven Test | | | | |
| Asphalt | PEN25°C (Before) | TFOT Wt Loss % | PEN25°C (After) | RETAINED PEN % |
| 0 % SDO, COMMIII 150/200 | 174 | 0 | 99 | 56.9 |
| 10 % SDO +250°C COMMIII 150/200 | 342 | 1.06 | 187 | 54.7 |
| 0 % SDO, RAC | 32 | 0.028 | | |
| 8.92 % SDO +250°C RAC | 65 | 0.60 | 39 | 60 |
| PEN = Penetration (dmm) COMMIII = A commercial Asphalt SDO = Sewage Sludge-Derived Oil RAC = Recovered Asphalt Cement TFOT = Thin-Film Oven Test | | | | |

As also noted above, the retained penetration was 60% which passes the Ministry of Transport of Ontario and ASTM D-946 specifications.

EXAMPLE 4

The change in viscosities after Thin-Film Oven Tests is shown below in Table 14.

TABLE 14

| RECOVERED ASPHALT CEMENT BLENDS VS. VISCOSITY AT 60°C | |
|---|---|
| Asphalt Cement Blend | Viscosity @ 60°C (P) |
| RAC +0% SDO +250°C | 29 720 |
| TFOT Residue | 45 210 |
| RAC +9% SDO +250°C | 5 330 |
| TFOT Residue | 9 583 |
| RAC - Recovered Asphalt Cement TFOT - Thin-Film Oven Test SDO - Sewage-Sludge Derived Oil | |

This viscosity change is within the specifications required by those Canadian transportation agencies who set this specification.

With 85/100 and 150/200 penetration grade asphalts it has been found that at least 5% of the +150°C sewage sludge-derived oil can be added before the blends fail the Thin-Film Oven Test due to volatization of the lighter components. With the heavier aged asphalts considerably more can be added of the +150°C sewage sludge-derived oil. Alternatively, a higher initial boiling point sewage sludge-derived oil could be used. Those asphalts could be diluted with other materials, e.g., soft virgin asphalt.

EXAMPLE 5

The compatibility of sewage sludge-derived oil with heavy residual materials was then assessed. Sewage sludge-derived oil was added to CANMET hydrocracking pitch (S.P.111°C) and to $ROSE_{TM}$ residue (S.P.158°C) in equal proportions, heated until liquid and thoroughly mixed. An aged Athabascan asphaltene fraction was similarly treated with twice its weight of sewage sludge-derived oil.

A description of the characteristics of the above-referred-to CANMET hydrocracking pitch is as follows: Very heavy material. Typically 50 - 80% Asphaltenes.

Asphaltene content varies with the feedstock and the conversion rate selected for the process. (See U.S. Patent No. 4,683,005 July 28, 1987 M. A. Poirier).

A description of the characteristics of the above-referred-to ROSE$_{TM}$ residue is as follows:

Residuum Oil Supercritical Extraction (ROSE$_{TM}$) process by the phenomena of reverse solubility separates asphaltenes from heavy oil residues using propane or butane solvent. The characteristics of the hydrocracking pitch will vary according to the feed stock used, but typically very high in asphaltenes: R & B softening Pt. 80-100°C

| Viscosities | 200-400 cSt @ 200°C |
|---|---|
| Nickel & Vanadium | 100-300 wppm (high) |

In the case of the hydrocracking pitch and the ROSE$_{TM}$ residue blends, the materials appeared to dissolve completely in the sewage sludge-derived oil. In the case of the asphaltenes, there appeared to be only a very small portion of skin-like material that did not dissolve in the sewage sludge-derived oil. This small amount of insoluble material probably was due to oxidation of the asphaltene fraction on ageing. The mixtures were very viscous, on cooling, but no phase separation could be detected, even after several weeks.

EXAMPLE 6

The addition of sewage sludge-derived oil to aged asphalt can markedly improve the resistance to stripping of the rejuvenated asphalt from aggregates. This is shown in the bar graph shown in Figure 4, which shows the results of the stripping by static immersion test.

As seen in Figure 4, 9% of sewage sludge-derived oil was added to the aged asphalt. In addition to rejuvenation, this retained surface coverage after the stripping test was 100% for this rejuvenated asphalt and was only 42% for the aged asphalt. The result for the recycled asphalt blended with sludge-derived oil exceeds the Ministry of Transport of Ontario requirement of 95% coverage for hard asphalts.

Industrial Applicability

This invention provides the industrial applicability of recycling used asphalt pavement in order to salvage the asphalt and the aggregate. This provides almost new materials for use in the construction of new asphalt pavements.

The positive results in softening salvaged asphalts, for improving compatibility, and for improving adhesion to aggregate for pavement recycling using sewage, sludge-derived oil indicate the expanded potential use and therefore market value for sewage sludge-derived oil. Sewage sludge-derived oil has an affinity for heavy asphaltic materials. The addition of sewage sludge-derived oil to aged asphalt markedly increases the ductilities. Sewage sludge-derived oils are fairly immiscible with hydrocarbon fraction that have high saturated hydrocarbon contents. There is a possibility that asphalts that are high in saturated hydrocarbons, in particular waxy components, may be incompatible when very large amounts of sewage sludge-derived oil are added. However, such asphalts would not be generally desired for paving.

**Claims**

1.  A method for rejuvenation of salvaged, old asphaltic pavement material, <u>characterized by</u> incorporating, into said old asphaltic pavement, a nitrogen-containing adhesion-improving, anti-stripping agent as an additive, said additive being <u>characterized by</u> being a sewage sludge-derived oil, or a fraction thereof, the sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, 3.4% to 5% by weight; oxygen, 5.8% to 6.9% by weight; sulfur, 0.3% to 0.8% by weight; hydrogen, 9.7% to 10.4%, and carbon, 76.9% to 79.8%.

2.  A method for improving the compatibility of aged asphalt in salvaged old asphalt paving materials with other asphaltic materials, <u>characterized by</u> incorporating, into said old asphaltic pavement, with or without other asphaltic materials, and/or rejuvenating agents and/or suitable softening agents, a sewage sludge-derived oil, or a fraction thereof, the sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, 3.4% to 5% by weight; oxygen, 5.8% to 6.9% by weight; sulfur, 0.3% to 0.8% by weight; hydrogen, 9.7% to 10.4%, and carbon, 76.9% to 79.8%.

3. A method for improving the resistance to stripping of rejuvenated asphalt cement aggregate <u>characterized by</u> incorporating, into a salvaged old asphaltic pavement, a novel nitrogen-containing adhesion-improving, anti-stripping agent as an additive, said additive <u>being characterized by</u> being a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, 3.4% to 5% by weight; oxygen, 5.8% to 6.9% by weight; sulfur, 0.3% to 0.8% by weight; hydrogen, 9.7% to 10.4%, and carbon, 76.9% to 79.8%.

4. The method of claims 1, 2 or 3 <u>characterized in that</u> the amount of said sewage sludge-derived oil is from about 2 to about 15% by weight.

5. An asphaltic composition including comminuted aged asphaltic pavement material and <u>characterized by</u> including an effective amount, e.g., from about 2% to about 15% by weight, of a blend of an agent, e.g., a hydrocarbon product with physical characteristics selected to restore aged asphalt to the requirements of current asphalt specifications, e.g., a soft asphalt cement, and/or a conventional asphalt cement, and/or a cutback asphalt in combination with a nitrogen-containing, adhesion-improving, anti-stripping agent, said agent being <u>characterized by</u> being a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridene-soluble compounds, having the following elemental chemical composition: nitrogen, 3.4% to 5% by weight; oxygen, 5.8% to 6.9% by weight; sulfur, 0.3% to 0.8% by weight; hydrogen, 9.7% to 10.4%, and carbon, 76.9% to 79.8%.

6. The asphaltic composition of claim 5 <u>characterized in that</u> said sewage sludge-derived oil has the following elemental composition: nitrogen, 3.42% to 4.95% by weight; oxygen, 5.84% to 6.89% by weight; sulfur, 0.34% to 0.83% by weight; hydrogen, 9.70% to 10.44% by weight; and carbon, 76.92 to 79.76% by weight.

7. The asphaltic composition of claims 5 or 6 <u>characterized in that</u> it includes as an additional agent, at least one rejuvenating agent or at least one softening agent.

8. The asphaltic composition of claim 7 <u>characterized in that</u> said additional agent is a soft asphalt cement, and/or a cutback asphalt, and/or a conventional asphalt cement.

9. The asphaltic composition of claims 5, 6, 7 or 8 blended with soft virgin asphalt.

10. The asphaltic composition of claims 5, 6, 7, 8 or 9 <u>characterized in that</u> the amount of said sewage sludge-derived oil in said blend is from about 2% to about 12% by weight.

**Patentansprüche**

1. Verfahren zur Aufbereitung von bituminösem Altstraßenbaumaterial, <u>dadurch gekennzeichnet</u>, daß man in den bituminösen Altstraßenbelag als Zusatzstoff einen stickstoffhaltigen Haftfestigkeitsverbesserer einarbeitet, wobei der Zusatzstoff <u>dadurch gekennzeichnet</u> ist, daß es sich dabei um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt: 3,4 bis 5 Gew.-% Stickstoff; 5,8 bis 6,9 Gew.-% Sauerstoff; 0,3 bis 0,8 Gew.-% Schwefel; 9,7 bis 10,4 Gew.-% Wasserstoff und 76,9 bis 79,8 Gew.-% Kohlenstoff.

2. Verfahren zur Verbesserung der Verträglichkeit von Altbitumen in bituminösen Altstraßenbaumaterialien mit anderen bituminösen Materialien, <u>dadurch gekennzeichnet</u>, daß man in den bituminösen Altstraßenbelag, gegebenenfalls zusammen mit anderen bituminösen Materialien und/oder Aufbereitungsmitteln und/oder geeigneten Weichmachern, ein aus Klärschlamm gewonnenes Öl oder eine Fraktion davon einarbeitet, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt: 3,4 bis 5 Gew.-% Stickstoff; 5,8 bis 6,9 Gew.-% Sauerstoff; 0,3 bis 0,8 Gew.-% Schwefel; 9,7 bis 10,4 Gew.-% Wasserstoff und 76,9 bis 79,8 Gew.-% Kohlenstoff.

**3.** Verfahren zur Verbesserung der Ablösungsfestigkeit von aufbereitetem Straßenbaubitumenagglomerat, <u>dadurch gekennzeichnet</u>, daß man in einen bituminösen Altstraßenbelag als Zusatzstoff einen neuen stickstoffhaltigen Haftfestigkeitsverbesserer einarbeitet, wobei der Zusatzstoff <u>dadurch gekennzeichnet</u> ist, daß es sich dabei um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt: 3,4 bis 5 Gew.-% Stickstoff; 5,8 bis 6,9 Gew.-% Sauerstoff; 0,3 bis 0,8 Gew.-% Schwefel; 9,7 bis 10,4 Gew.-% Wasserstoff und 76,9 bis 79,8 Gew.-% Kohlenstoff.

**4.** Verfahren nach den Ansprüchen 1, 2 oder 3, <u>dadurch gekennzeichnet</u>, daß man etwa 2 bis etwa 15 Gew.-% des aus Klärschlamm gewonnenen Öls einarbeitet.

**5.** Bitumenmasse, enthaltend zerkleinertes bituminöses Altstraßenbaumaterial und <u>dadurch gekennzeichnet</u>, daß sie eine wirksame Menge, z.B. etwa 2 bis etwa 15 Gew.-%, eines Gemischs aus einem Mittel, z.B. einem Kohlenwasserstoffprodukt mit physikalischen Eigenschaften, die zur erneuten Einstellung von Altbitumen gemäß den Anforderungen moderner Bitumenspezifikationen ausgewählt werden, z.B. einem Straßenbauweichbitumen und/ oder einem herkömmlichen Straßenbaubitumen und/oder einem Verschnittbitumen, sowie einem stickstoffhaltigen Haftfestigkeitsverbesserer enthält, wobei der Haftfestigkeitsverbesserer <u>dadurch gekennzeichnet</u> ist, daß es sich dabei um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt: 3,4 bis 5 Gew.-% Stickstoff; 5,8 bis 6,9 Gew.-% Sauerstoff; 0,3 bis 0,8 Gew.-% Schwefel; 9,7 bis 10,4 Gew.-% Wasserstoff und 76,9 bis 79,8 Gew.-% Kohlenstoff.

**6.** Bitumenmasse nach Anspruch 5, <u>dadurch gekennzeichnet</u>, daß das aus Klärschlamm gewonnene Öl die folgende Elementarzusammensetzung aufweist: 3,42 bis 4,95 Gew.-% Stickstoff; 5,84 bis 6,89 Gew.-% Sauerstoff; 0,34 bis 0,83 Gew.-% Schwefel; 9,70 bis 10,44 Gew.-% Wasserstoff und 76,92 bis 79,76 Gew.-% Kohlenstoff.

**7.** Bitumenmasse nach Anspruch 5 oder 6, <u>dadurch gekennzeichnet</u>, daß sie als weiteres Mittel mindestens ein Aufbereitungsmittel oder mindestens einen Weichmacher enthält.

**8.** Bitumenmasse nach Anspruch 7, <u>dadurch gekennzeichnet</u>, daß es sich bei dem zusätzlichen Mittel um ein Straßenbauweichbitumen und/oder ein Verschnittbitumen und/oder ein herkömmliches Weichbitumen handelt.

**9.** Bitumenmasse nach den Ansprüchen 5, 6, 7 oder 8, gemischt mit frischem Weichbitumen.

**10.** Bitumenmasse nach den Ansprüchen 5, 6, 7, 8 oder 9, <u>dadurch gekennzeichnet</u>, daß die Menge des aus Klärschlamm gewonnenen Öls in dem Gemisch etwa 2 bis etwa 12 Gew.-% beträgt.

**Revendications**

**1.** Méthode de régénération de matériau de revêtement bitumineux ancien récupéré, caractérisée par l'incorporation, dans ledit revêtement bitumineux ancien, d'un agent anti-stripage, améliorant l'adhésion, contenant de l'azote, en tant qu'additif, ledit additif étant caractérisé en étant une huile dérivée de boues d'égout, ou une fraction de celle-ci, l'huile dérivée de boues d'égout comprenant un mélange d'hydrocarbures aliphatiques saturés, d'hydrocarbures monoaromatiques, d'hydrocarbures diaromatiques, d'hydrocarbures polyaromatiques, de composés polaires et de composés basiques, solubles dans la pyridine, ayant la composition chimique élémentaire suivante: azote, 3,4 % à 5 % en poids; oxygène 5,8 % à 6,9 % en poids; soufre, 0,3 % à 0,8 % en poids; hydrogène, 9,7 % à 10,4 %, et carbone, 76,9 % à 79,8 %.

**2.** Méthode destinée à l'amélioration de la compatibilité de bitume ancien dans des matériaux de revêtement bitumineux anciens récupérés avec d'autres matériaux bitumineux, caractérisée par l'incorporation, dans ledit revêtement bitumineux ancien, avec ou sans d'autres matériaux bitumineux, et/ou d'agents de régénération et/ou d'agents de ramollissement appropriés, d'une huile dérivée de boues d'égout ou d'une fraction de celle-ci, l'huile dérivée de boues d'égout comprenant un mélange d'hydrocarbures aliphatiques saturés, d'hydrocarbures monoaromatiques, d'hydrocarbures diaromatiques, d'hydrocarbures polyaromatiques, de composés polaires et de composés basiques, solubles dans la pyridine, ayant la composition chimique élémentaire suivante: azote, 3,4 % à 5 % en poids; oxygène 5,8 % à 6,9 % en poids; soufre, 0,3 % à 0,8 % en poids; hydrogène, 9,7 % à 10,4 %, et carbone, 76,9 % à 79,8 %.

3. Méthode destinée à l'amélioration de la résistance au stripage d'agrégat de ciment de bitume régénéré, caractérisée par l'incorporation, dans un revêtement bitumineux ancien régénéré, d'un nouvel agent anti-stripage, améliorant l'adhésion, contenant de l'azote, en tant qu'additif, ledit additif étant caractérisé en étant une huile dérivée de boues d'égout, ou une fraction de celle-ci, ladite huile dérivée de boues d'égout comprenant un mélange d'hydrocarbures aliphatiques saturés, d'hydrocarbures monoaromatiques, d'hydrocarbures di-aromatiques, d'hydrocarbures polyaromatiques, de composés polaires et de composés basiques, solubles dans la pyridine, ayant la composition chimique élémentaire suivante: azote, 3,4 % à 5 % en poids; oxygène 5,8 % à 6,9 % en poids; soufre, 0,3 % à 0,8 % en poids; hydrogène, 9,7 % à 10,4 %, et carbone, 76,9 % à 79,8 %.

4. Méthode selon les revendications 1, 2 ou 3, caractérisée en ce que la quantité de ladite huile dérivée de boues d'égout est d'environ 2 à environ 15 % en poids.

5. Composition bitumineuse incluant un matériau de revêtement bitumineux ancien réduit en morceaux et caractérisée par l'inclusion d'une quantité efficace, par exemple d'environ 2 % à environ 15 % en poids, d'un mélange d'un agent, par exemple d'un produit d'hydrocarbure avec des caractéristiques physiques choisies pour restaurer du bitume ancien aux exigences de spécifications de bitume courantes, par exemple un ciment de bitume mou, et/ou un ciment de bitume classique et/ou un bitume fluxé, en combinaison à un agent anti-stripage, améliorant l'adhésion, contenant de l'azote, ledit agent étant caractérisé en étant une huile dérivée de boues d'égout, ou une fraction de celle-ci, ladite huile dérivée de boues d'égout comprenant un mélange d'hydrocarbures aliphatiques saturés, d'hydrocarbures mono-aromatiques, d'hydrocarbures diaromatiques, d'hydrocarbures polyaromatiques, de composés polaires et de composés basiques, solubles dans la pyridine, ayant la composition chimique élémentaire suivante: azote, 3,4 % à 5 % en poids; oxygène 5,8 % à 6,9 % en poids; soufre, 0,3 % à 0,8 % en poids; hydrogène, 9,7 % à 10,4 %, et carbone, 76,9 % à 79,8 %.

6. Composition bitumineuse selon la revendication 5, caractérisée en ce que ladite huile dérivée de boues d'égout a la composition élémentaire suivante: azote, 3,42 % à 4,95 % en poids; oxygène 5,84 % à 6,89 % en poids; soufre, 0,34 % à 0,83 % en poids; hydrogène, 9,70 % à 10,44 % en poids, et carbone, 76,92 à 79,76 % en poids.

7. Composition bitumineuse selon les revendications 5 ou 6, caractérisée en ce qu'elle inclut en tant qu'agent supplémentaire au moins un agent de régénération ou au moins un agent de ramollissement.

8. Composition bitumineuse selon la revendication 7, caractérisée en ce que ledit agent supplémentaire est un ciment de bitume mou, et/ou un bitume fluxé et/ou un ciment de bitume classique.

9. Composition bitumineuse selon les revendications 5, 6, 7, ou 8, mélangée avec du bitume vierge mou.

10. Composition bitumineuse selon les revendications 5, 6, 7, 8 ou 9, caractérisée en ce que la quantité de ladite huile dérivée de boues d'égout dans ledit mélange est d'environ 2 % à environ 12 % en poids.

PENETRATION WITH SDO CONTENT
IN RECOVERED ASPHALT CEMENT

FIG.1

■ 4 DEG.C   + 25 DEG. C

VISCOSITY WITH SDO CONTENT
IN RECOVERED ASPHALT CEMENT

FIG.2

■ 100 DEG. C   + 135 DEG. C

PENETRATION WITH SDO CONTENT
IN RECOVERED ASPHALT CEMENT

FIG.3

STRIPPING BY STATIC IMMERSION
BLENDS WITH SHELL 85/100 ASPHALT
ADDITIVE + 150C

AGGREGATE: JAIMESON

FIG.4